**Europäisches Patentamt**

**European Patent Office**

**Office européen des brevets**

(11) Veröffentlichungsnummer: **0 309 674 B1**

(12) **EUROPÄISCHE PATENTSCHRIFT**

(45) Veröffentlichungstag der Patentschrift: **04.05.94**

(51) Int. Cl.5: **D06N 7/00**, C08L 51/06, C08L 23/02

(21) Anmeldenummer: **88111903.6**

(22) Anmeldetag: **23.07.88**

Die Akte enthält technische Angaben, die nach dem Eingang der Anmeldung eingereicht wurden und die nicht in dieser Patentschrift enthalten sind.

(54) **Schwerbeschichtungmasse für textile Bodenbeläge.**

(30) Priorität: **26.09.87 DE 3732532**

(43) Veröffentlichungstag der Anmeldung:
**05.04.89 Patentblatt 89/14**

(45) Bekanntmachung des Hinweises auf die Patenterteilung:
**04.05.94 Patentblatt 94/18**

(84) Benannte Vertragsstaaten:
**AT BE CH DE ES FR GB GR IT LI LU NL SE**

(56) Entgegenhaltungen:
**EP-A- 0 171 513**
**DE-A- 2 013 826**
**US-A- 4 191 798**
**US-A- 4 680 223**

**TEXTIL-INDUSTRIE, Band 73, Nr. 9, September 1971, Seiten 585-587; K. LUKOSCHEK:"Herstellung und Eigenschaften von Teppichfliesen mit Rückenbeschichtung auf der Basis von ataktischem Polypropylen und Polyurethan"**

(73) Patentinhaber: **HÜLS AKTIENGESELLSCHAFT**

**D-45764 Marl(DE)**

(72) Erfinder: **Kehr, Helmut, Dr.**
**Gustav-Sack-Strasse 8**
**D-4235 Schermbeck(DE)**
Erfinder: **Leppek, Heinrich**
**Möllerstrasse 10**
**D-4660 Gelsenkirchen-Buer(DE)**
Erfinder: **Kühnle, Adolf, Dr.**
**Hoechster Strasse 6**
**D-4370 Marl(DE)**
Erfinder: **Schleinzer, Matthias, Dr.**
**Im Werth 39**
**D-4270 Dorsten 1(DE)**

**Beschreibung**

Teppichschwerbeschichtungsmassen auf Grundlage amorpher Polyalphaolefine (APAO) sind neben solchen aus Bitumen-, PVC- und Polyurethanmischungen seit Jahren bekannt. Eine typische Rezeptur besteht aus etwa 30 % eines thermoplastischen Bindemittels und 70 % Füllstoff. Als Bindemittel dienen z. B. ataktisches Polypropylen (APP) unterschiedlicher Qualität (Zwangsanfall aus der Homo- oder Copolymerisation) oder definierte ataktische Co- und Terpolymere. Aus der zuletzt genannten Gruppe haben sich insbesondere Propen/Buten-(1)/Ethen-Terpolymere, Propen/Ethen-, Buten-(1)/Ethen- und Buten-(1)/Propen-Copolymere gut bewährt.

Isotaktisches Polypropylen (IPP), Harz, Wachs oder Paraffin kann wahlweise zur gezielten Modifizierung der Eigenschaften zugesetzt werden. Als Füllstoff dient hauptsächlich Kalksteinmehl, in einigen Fällen auch Schwerspat.

Man bringt die Schwerbeschichtungsmasse üblicherweise als Heißschmelzkleber auf unterschiedlich vorbehandelte Teppichobermaterialien, die z. B. einen Latex- oder hot-melt-Vorstrich tragen, auf (siehe hierzu z. B. H. Körner, "Die Verwendung von ataktischem Polypropylen am Beispiel der Teppichschwerbeschichtung", Kunststoffe 65, Seite 467 f., 1975). Bevorzugtes Einsatzgebiet der Beschichtungsmassen sind Teppichfliesen.

Mit zunehmendem Einsatz von Teppichfliesen in Wohnungen, Krankenhäusern, Schalterhallen von Banken usw. sind die Anforderungen, die an eine gute Schwerbeschichtungsmasse gestellt werden, laufend gestiegen. Beanstandet wird oft die mangelnde Standfestigkeit der mit ataktischen Polyolefinen hergestellten Teppichfliesen. Bei hoher Belastung, wie sie z. B. unter Stuhl- oder Tischbeinen oder beim Begehen mit Stöckelschuhabsätzen auftritt, bilden sich bleibende Eindruckstellen oder Schädigungen, die das Liegeverhalten bzw. die Dimensionsstabilität der Fliesen beeinträchtigen. Ursache dafür ist die plastische Verformung der Beschichtungsmasse unter dem Einfluß einer Last; diese Erscheinung wird als "Kalter Fluß" bezeichnet.

Man kann den Kalten Fluß durch Zusatz von IPP oder durch Verwendung höhermolekularer ataktischer Polyolefine verringern. Jedoch wird hierdurch die Flexibilität und damit das Liegeverhalten ungünstig beeinflußt. Auch in verarbeitungstechnischer Hinsicht können, bedingt durch die dann erhöhte Schmelzviskosität der Masse, Probleme auftreten. Zudem neigen Schwerbeschichtungsmassen mit hohem IPP-Anteil, bedingt durch einen Nachkristallisationsprozeß, zum Schrumpfen. Zur Erlangung eines ausgewogenen Eigenschaftsbildes ist man in der Praxis daher meist bestrebt, den IPP-Zusatz auf das gerade notwendige Maß zu beschränken.

Aufgabe der vorliegenden Erfindung ist daher eine Schwerbeschichtungsmasse, die mit der üblichen hot-melt-Technik verarbeitbar ist und neben einer geringen Eindringtiefe bei Belastung, d. h. geringem Kalten Fluß, zusätzlich ein teilelastisches Rückstellungsvermögen besitzt.

Erfindungsgemäß wird diese Aufgabe durch eine füllstoffhaltige Schwerbeschichtungsmasse auf Polyolefingrundlage gelöst, wobei die Polyolefin-Grundlage ein amorphes Polyalphaolefin (APAO) enthält und worin das Polyolefin teilweise oder gänzlich mit einer organischen ungesättigten Säure oder einem organischen ungesättigten Säureanhydrid umgesetzt ist.

Bevorzugte Ausführungsformen sind wie folgt:

A Entweder ersetzt man den üblicherweise zur Verbesserung der Standfestigkeit eingesetzten IPP-Anteil des Bindemittels ganz oder teilweise durch ein überwiegend kristallines Polyolefin, welches durch Umsetzung mit doppelbindungshaltigen organischen Säuren oder einem entsprechenden Säureanhydrid in geeigneter Weise funktionalisiert wurde,

B oder man ersetzt in den herkömmlichen Schwerbeschichtungsmassen den Anteil des ataktischen Polyolefins ganz oder teilweise durch ein amorphes (niedrigkristallines) Polyolefin, das in gleicher Weise funktionalisiert ist.

Polymere, die gemäß Ausführungsform A eingesetzt werden können, sind z. B.

- mit Acrylsäure, Methacrylsäure oder Fumarsäure gepfropfte Polypropylene. Zu dieser Verbindungsklasse zählen z. B. die von der BP Chemicals Limited vertriebenen POLYBOND-Typen.
- mit Maleinsäureanhydrid (MSA) gepfropfte Polypropylene. Entsprechende Polymere werden z. B. von der Fa. Himont unter dem Namen HERCOPRIME vertrieben.

Als ungesättigte Säure eignet sich grundsätzlich auch Maleinsäure, Maleinsäuremonoalkylester, Fumarsäuremonoalkylester und Aconitsäure. Neben Polypropylen läßt sich auch Propylen/Ethylen-Copolymer, Propen/Buten-(1)-Copolymer, Buten-(1)/Ethylen-Copolymer, ebenso ein Gemisch aus Polypropylen und den zuletzt genannten Copolymeren verwenden.

Im allgemeinen erfolgt die Herstellung der beschriebenen Pfropfpolymere des Polypropylens durch übliche Pfropfpolymerisation der ungesättigten Säuren bzw. Anhydride in Gegenwart des Pfropfsubstrates und eines Radikalbildners. Als letztere können Peroxide, Azo-Verbindungen oder energiereiche Strahlung verwendet werden. Typische Synthesebeispiele sind in EP-A- 0 188 926, BE-A- 692 301, JP-A- 27 421/66 oder US-A- 3 499 819 angeführt.

Die derart funktionalisierten Polymeren werden in der Größenordnung von 1 bis 20 %, bevorzugt 3 bis 12 % (bezogen auf das Bindemittel) dem Bindemittel zugegeben. Zum Erzielen eines ausreichenden Effektes soll die Säurezahl des funktionalisierten Polymers > 10 mg KOH/g sein, bevorzugt 40 bis 60 mg KOH/g (bei Anhydriden bestimmt nach vorheriger Ringöffnung mit Wasser). Für die Praxis akzeptable Verarbeitungsviskositäten erhält man, wenn der MFI 230/2 des Pfropfpolymers > 30 g/10 min liegt, bevorzugt 40 g/10 min.

Polymere gemäß Ausführungsform B werden z. B. durch radikalische Pfropfung amorpher Polyolefine mit Maleinsäureanhydrid oder Fumarsäure hergestellt. Besonders geeignete amorphe Polyolefine sind die unter dem Handelsnamen VESTOPLAST erhältlichen Propen/Buten/Ethen-Terpolymeren der Hüls AG z. B. entsprechend DE-C- 29 30 108. Die Synthese derartiger Pfropfpolymere gelingt in Lösung oder Schmelze in Gegenwart von Peroxiden. Entsprechende Beispiele sind z. B. in DE-A- 15 46 982, DD-A- 20 232, DE-B- 26 32 869 und im Journal of Applied Polymer Science, Vol. 13, Seite 1625 ff. (1969) beschrieben.

Zu beachten ist, daß im Zuge der radikalischen Pfropfung häufig ein Abbau des Grundpolymers zu beobachten ist. Insbesondere beim Vorliegen tertiärer C-Atome in der Polymerkette kann sich dieser Abbau negativ bemerkbar machen, da erfahrungsgemäß der Kalte Fluß und damit die Eindringtiefe nach Belastung mit abnehmendem Molekulargewicht zunimmt. Der durch die Einführung von Carboxylgruppen erzielbare positive Effekt überwiegt jedoch bei weitem den mit der Pfropfung einhergehenden negativen Effekt des peroxidischen Abbaus des Polymers.

Man kann auch amorphe Polyolefine einsetzen, welche Polybutadien enthalten. Aus der DE-B- 27 08 757 ist die den Pfropfungsgrad erhöhende Wirkung von Polybutadien während der Pfropfreaktion bekannt. Bei der Verwendung dieses Pfropfungshilfsmittels findet gleichzeitig eine Teilvernetzung des Polymers statt. Wenn man doppelbindungshaltige Ausgangspolymere einsetzt (z. B. Propen/Ethen/Hexadien-1,4-Terpolymere), kann man auf den Zusatz von Peroxiden verzichten, da die Pfropfung dann rein thermisch nach Art einer en-Reaktion abläuft (vgl. z. B. DE-A- 24 01 149 oder US-A- 3 260 708). Bei der Pfropfung in der Schmelze hat die Ausführung gemäß US-A- 3 862 265 im Extruder Vorteile. Alternativ kann man jedoch auch mit dem Batch-Prozeß im Mischkessel arbeiten.

Ein geeignetes amorphes Pfropfpolymerisat besitzt eine Säurezahl von 2 bis 40, bevorzugt 3 bis 10 mg KOH/g (bei Anhydriden bestimmt nach vorheriger Umsetzung der Säureanhydridgruppe mit Wasser und Entfernung der nicht kovalent gebundenen Anteile). Dies entspricht im Falle der Pfropfung mit MSA einem MSA-Gehalt von 0,26 bis 0,9 Gew.-%.

Etwa vorhandenes, während der Pfropfreaktion nicht kovalent gebundenes Monomer (z. B. MSA) hat auf die mechanischen Eigenschaften der Beschichtungsmasse zwar keinen negativen Einfluß. Zur Vermeidung von Geruchsbelästigungen kann man es aber leicht mit langkettigen Alkoholen oder Aminen zum entsprechenden Halbester oder Amid umsetzen.

Die Schmelzviskosität des amorphen Pfropfpolymers bei 190 °C liegt im Bereich zwischen 300 und 60 000, bevorzugt 1 000 und 20 000 mPa s. Durch Variation des Wachs-, Harz- oder IPP-Anteils kann man die im Bindemittel gewünschte Schmelzviskosität einstellen. Im allgemeinen erhält man bei einem Füllstoffanteil von 70 Gew.-% gut verarbeitbare Schwerbeschichtungsmassen, wenn das Bindemittel eine Schmelzviskosität bei 190 °C von 5 000 bis maximal 20 000 mPa s besitzt.

Ein Bindemittelzusatz von 3 bis 5 % isotaktischem Polypropylen mit einem MFI 190/5 von 70 g/10 min hat sich neben dem amorphen Pfropfpolymer insbesondere dann als vorteilhaft erwiesen, wenn auf höchste Standfestigkeit der Massen Wert gelegt wird, ohne die Flexibilität oder Verarbeitungsviskosität in unzulässigem Maß zu verschlechtern.

Als Füllstoff eignet sich Kalksteinmehl, Schwerspat und Glimmer. Zu bevorzugen ist in allen Fällen ein Kalksteinmehl mit einer Korngrößenverteilung zwischen 24 und 192 μm (ein brauchbares Handelsprodukt ist z. B. der Jura-Weiß Füllstoff, Typ G.Gr. Al. des Kalksteinwerkes Ulm). Der Füllstoffgehalt kann zwischen 50 und 85 Gew.-% variieren und liegt bevorzugt bei 70 %. Die höchsten Füllstoffgehalte sind möglich bei der Verwendung von ataktischen Polyolefinen hoher Molmasse und hohem Buten-(1)-Gehalt.

Im Falle der MSA-gepfropften Polymere ist eine Zugabe von Wasser zur Ringöffnung des Anhydrids nicht notwendig; offenbar reichen die auf der Füllstoffoberfläche vorhandenen Feuchtigkeitsspuren hierfür aus.

Man stellt die füllstoffhaltigen Massen im allgemeinen in mit Inertgas überlagerten Mischkesseln derart her, daß man zunächst die ataktische Komponente (z. B. APAO oder MSA-gepfropftes APAO) aufschmilzt und dann bei einer Temperatur von 200 °C mit dem isotaktischen Polymer (z. B. IPP oder funktionalisiertem IPP) bis zur Ausbildung einer homogenen Mischung vermengt. Nach der Zugabe von Viskositätsreglern wie Wachs und Harz arbeitet man zuletzt den Füllstoff ein.

Zur Überprüfung der mechanischen Eigenschaften stellt man von der Schwerbeschichtungsmasse Preßplatten der Größe 10 x 10 x 0,2 cm her (Aufschmelzen in einer Matrize bei 190 °C; Preßzeit 10 min bei 150 °C; Ablagerungszeit nach Herstellung: 48 h bei Raumtemperatur). Man mißt an dieser Platte die Eindringtiefe eines kreisrunden $1 cm^2$- Stempels nach 4 Stunden Belastung mit 50 $kp/cm^2$ ("4 h-Zeitstand-test"), ferner das Rückstellungsvermögen (verbleibende Eindringtiefe) nach einer Entlastungzeit von 10 min. Die erste Meßgröße ist ein Maß für die Standfestigkeit, die zweite ergibt einen Hinweis auf die elastischen Eigenschaften der Masse.

Eine Gegenüberstellung herkömmlicher Rezepturen und der neu entwickelten Formulierungen zeigt, daß der Ersatz von IPP durch funktionalisierte isotaktische Polymere bzw. der Ersatz von APP oder APAO durch ein amorphes Pfropfpolymer in Schwerbeschichtungsmassen mindestens 40 % bessere Standfestigkeiten, d. h. verringerte Eindringtiefen bei Belastung ergibt. Auf Grund eines verbesserten Rückstellungsvermögens ist die bleibende Verformung bzw. Eindringtiefe deutlich geringer.

Für die Praxis bedeutet dies, daß man beispielsweise mit vergleichsweise geringeren Mengen funktionalisiertem isotaktischem Polymer auskommt, um gleiche Standfestigkeiten zu erzielen, wie man sie normalerweise nur mit höherem IPP-Anteil erreichen kann. Auf diese Weise kann man die Verarbeitungsviskosität der Masse auf ein akzeptables Niveau begrenzen. Weitere Vorteile der neuentwickelten Schwerbeschichtungsmassen liegen in dem verringerten Schrumpf und dem auf Grund der größeren Flexibilität verbesserten Liegeverhalten der so beschichteten Teppichfliesen.

In den nachfolgenden Beispielen werden folgende Stoffe verwendet:
APAO 1: Ein amorphes Propen/Buten-(1)-Ethen-Terpolymerisat mit einer Schmelzviskosität bei 190 °C von 8 000 mPa s und einer Penetration 100/25/5 (in Anlehnung an DIN 52 010) von 15 0,1 mm.
APAO 2: Ein amorphes Propen/Buten-(1)-Ethen-Terpolymerisat mit einer Schmelzviskosität bei 190 °C von 50 000 mPa s und einer Penetration 100/25/5 (in Anlehnung an DIN 52 010) von 20 0,1 mm.
APAO 3 : Ein amorphes Buten-(1)/Propen/Ethen-Terpolymerisat mit einer Schmelzviskosität bei 190 °C von 8 000 mPa s und einer Penetration 100/25/5 (in Anlehnung an DIN 52 010) von 15 0,1 mm.
IPP 1: Isotaktisches Polypropylen mit MFI 190/5 (nach DIN 53 753, Code T) von 70 g/10 min.
Wachs 1: Polyethylenwachs mit einem Tropfpunkt von 120 °C und einem mittleren Molekulargewicht von 1 600.
Harz 1: Aliphatisches Kohlenwasserstoffharz mit einem Erweichungspunkt (Ring und Kugel) von 100 °C und einem mittleren Molekulargewicht von 2 400.
KP-P 1: Mit 6 % Acrylsäure gepfropftes Polypropylen mit MFI 190/5 von 64 g/10 min.
KP-P 2: Mit 2 % Maleinsäureanhydrid gepfropftes Polypropylen mit einem J-Wert von 70 ml/g.
In allen Fällen werden als Stabilisator 0,2 Tle IRGANOX[R] B 225 (Ciba-Geigy) eingesetzt.
Das als Füllstoff verwendete Kalksteinmehl ist Jura-Weiß G.Gr. AI.


Vergleichsbeispiele:


Herstellung und Eigenschaften herkömmlicher Schwerbeschichtungsmassen:
95 Teile APAO 1 werden in einem ölbeheizten Behälter mit Stickstoff überlagert, mit 0,2 Teilen Stabilisator vermengt und bei 200 °C zum Schmelzen gebracht. Über ein Rührwerk arbeitet man 5 Teile IPP 1 ein.

Man versetzt das fertige Bindemittel im Verhältnis 30 : 70 mit Kalksteinmehl und homogenisiert die Mischung. Die Eigenschaften des erkalteten Bindemittels sind in Tabelle 1, Masse A zusammengestellt.

Bei den Massen B und C der Tabelle 1 handelt es sich ebenfalls um herkömmliche Schwerbeschichtungsmassen. Sie dienen ebenfalls zum Vergleich mit den nachfolgend beschriebenen erfindungsgemäßen Massen.


Beispiel 1:


Herstellung und Eigenschaften einer Schwerbeschichtungsmasse, die mit einem mit Acrylsäure gepfropften Polypropylen modifiziert wurde.

95 Teile APAO 2 werden in einem ölbeheizten Mischkessel mit Stickstoff überlagert, mit 0,2 Teilen Stabilisator vermengt und bei 200 °C zum Schmelzen gebracht. Über ein Rührwerk arbeitet man 5 Teile KP-P 1 ein und versetzt das fertige Bindemittel im Verhältnis 30 : 70 mit Kalksteinmehl. Man homogenisiert die Mischung. Die Eigenschaften der Schwerbeschichtungsmasse sind in Tabelle 2, Masse D zusammengestellt.

Beispiel 2:

Man verfährt analog Beispiel 1, ersetzt jedoch diesmal das KP-P 1 durch die gleiche Menge KP-P 2. Die Eigenschaften dieser Schwerbeschichtungsmasse sind in Tabelle 2, Masse E beschrieben.

Beispiel 3:

In der herkömmlichen Schwerbeschichtungsmasse C (siehe Tabelle 1) wird IPP durch die gleiche Masse KP P 1 ersetzt. Die Eigenschaften der so hergestellten Masse F sind in Tabelle 2 zusammengestellt.

Beispiel 4:

Zwecks Herstellung eines amorphen (bzw. niedrigkristallinen) MSA-Pfropfpolymers werden 450 g APAO 1, 11,25 g Maleinsäureanhydrid und 1,35 g Dicumylperoxid in einem Kneter innig vermischt, mit Stickstoff überlagert und mit einer Aufheizrate von 2 °C/min auf 180 °C erwärmt. Unter ständigem Kneten beläßt man die Masse noch 30 Minuten bei dieser Temperatur und kann anschließend direkt zur Schwerbeschichtungsmasse weiterverarbeiten. Das so hergestellte Pfropfpolymer besitzt eine Säurezahl von 5,9 mg KOH/g (bestimmt nach Umsetzung mit Wasser und Reinigung durch zweimaliges Ausfällen mit Isopropanol aus toluolischer Lösung), eine Schmelzviskosität bei 190 °C von 5 000 mPa s, einen Erweichungspunkt (nach DIN 52 011) von 104 °C und eine Penetration (nach DIN 52 010) von 15 0,1 mm.

95 Teile des Pfropfpolymers, 5 Teile IPP 1 und 0,2 Teile Stabilisator werden in einem Mischkessel mit Stickstoff überlagert und bei 200 °C unter Rühren aufgeschmolzen. Dem fertigen Bindemittel setzt man im Verhältnis 30 : 70 Kalksteinmehl zu und homogenisiert die Mischung. Die Eigenschaften der Schwerbeschichtungsmasse sind in Tabelle 3, Masse G zusammengestellt.

Beispiel 5:

Unter den gleichen Bedingungen wie in Beispiel 4 beschrieben pfropft man 450 g APAO 2 mit MSA. Das erhaltene amorphe Pfropfpolymer besitzt eine Säurezahl von 4,2 mg KOH/g, eine Schmelzviskosität bei 190 °C von 19 000 mPa s, einen Erweichungspunkt von 107 °C und eine Penetration von 14 0,1 mm. Alle Kenngrößen wurden analog Beispiel 4 bestimmt.

Man verfährt analog Beispiel 4 und erhält die Schwerbeschichtungsmasse H, deren Eigenschaften sich in Tabelle 3 finden.

Beispiel 6:

In gleicher Weise wie unter Beispiel 4 beschrieben pfropft man 450 g APAO 2 mit 22,5 g MSA in Gegenwart von 2,7 g Dicumylperoxid. Das erhaltene amorphe Pfropfpolymer besitzt eine Säurezahl von 8,8 mg KOH/g, eine Schmelzviskosität bei 190 °C von 19 000 mPa s, einen Erweichungspunkt von 160 °C und eine Penetration von 10 0,1 mm. Alle Kenngrößen wurden analog Beispiel 4 bestimmt.

Man verfährt analog Beispiel 4 und erhält die Schwerbeschichtungsmasse I (Tabelle 3).

Tabelle 1: Eigenschaften und Zusammensetzung herkömmlicher Schwerbeschichtungsmassen

| Zusammensetzung | Masse A | Masse B | Masse C |
|---|---|---|---|
| APAO | 28,5 Tle APAO 1 | 28,5 Tle APAO 2 | 11,4 Tle APAO 2 |
| APAO | - | - | 11,4 Tle APAO 3 |
| IPP | 1,5 Tle IPP 1 | 1,5 Tle IPP 1 | 1,2 Tle IPP 1 |
| Wachs | - | - | 3 Tle Wachs 1 |
| Harz | - | - | 3 Tle Harz 1 |
| Füllstoff | 70 Tle Kalkstein-mehl | 70 Tle Kalkstein-mehl | 70 Tle Kalkstein-mehl |

Eigenschaften des Bindemittels

| | Masse A | Masse B | Masse C |
|---|---|---|---|
| Schmelzviskosität bei 190 °C | 12 500 mPa s | 68 000 mPa s | 14 000 mPa s |
| Penetration (nach DIN 52 010) | 17 0,1 mm | 10 0,1 mm | 11 0,1 mm |
| Erweichungspunkt (n. DIN 52 011) | 159 °C | 160 °C | 158 °C |

Eigenschaften der Schwerbeschichtungsmasse

| | Masse A | Masse B | Masse C |
|---|---|---|---|
| Eindringtiefe eines 1 cm²-Stempels nach 4 h Belastung mit 50 kp/cm² in eine 2 mm Preßplatte | 1,4 mm | 0,5 mm | 0,71 mm |
| Verbleibende Eindringtiefe nach 10 min Entlastung, Rückstellung auf | 1,22 mm | 0,33 mm | 0,60 mm |

Tabelle 2: Eigenschaften und Zusammensetzung von Schwerbeschichtungsmassen, die mit kristallinen, durch
Carboxyl- oder Saureanhydridgruppen funktionalisierten Polyolefinen modifiziert wurden

| Zusammensetzung | Masse D | Masse E | Masse F |
|---|---|---|---|
| APAO | 28,5 Tle APAO 2 | 28,5 Tle APAO 2 | 11,4 Tle APAO 2 |
| APAO | - | - | 11,4 Tle APAO 3 |
| Krist. Pfropfpolymer | 1,5 Tle KP-P 1 | 1,5 Tle KP-P 2 | 1,2 Tle KP-P 1 |
| Wachs | - | - | 3 Tle Wachs 1 |
| Harz | - | - | 3 Tle Harz 1 |
| Füllstoff | 70 Tle Kalkstein-mehl | 70 Tle Kalkstein-mehl | 70 Tle Kalkstein-mehl |
| **Eigenschaften des Bindemittels** | | | |
| Schmelzviskosität bei 190 °C | 67 000 mPa s | 50 000 mPa s | 14 000 mPa s |
| Penetration (nach DIN 52 010) | 10 0,1 mm | 10 0,1 mm | 11 0,1 mm |
| Erweichungspunkt (n. DIN 52 011) | 159 °C | 147 °C | 158 °C |
| **Eigenschaften der Schwerbeschichtungsmasse** | | | |
| Eindringtiefe eines 1 cm²-Stempels nach 4 h Belastung mit 50 kp/cm² in eine 2 mm Preßplatte | 0,28 mm | 0,25 mm | 0,22 mm |
| Verbleibende Eindringtiefe nach 10 min Entlastung, Rückstellung auf | 0,13 mm | 0,10 mm | 0,11 mm |

EP 0 309 674 B1

Tabelle 3: Eigenschaften und Zusammensetzung von Schwerbeschichtungsmassen, die mit amorphen
MSA-Pfropfpolymeren modifiziert wurden

| Zusammensetzung | Masse G | Masse H | Masse I |
|---|---|---|---|
| Amorphes MSA-Pfropfpolymer | 28,5 Pfropfpolymer n. Beispiel 4 | 28,5 Tle Pfropfpolymer n. Beispiel 5 | 28,5 Tle Pfropfpolymer n. Beispiel 6 |
| IPP | 1,5 Tle IPP 1 | 1,5 Tle IPP 1 | 1,5 Tle IPP 1 |
| Füllstoff | 70 Tle Kalkstein-mehl | 70 Tle Kalkstein-mehl | 70 Tle Kalkstein-mehl |
| Eigenschaften des Bindemittels | | | |
| Schmelzviskosität bei 190 °C | 11 000 mPa s | 24 000 mPa s | 23 00 mPa s |
| Penetration (nach DIN 52 010) | 17 0,1 mm | 11 0,1 mm | 12 0,1 mm |
| Erweichungspunkt (n. DIN 52 011) | 159 °C | 159 °C | 158 °C |
| Eigenschaften der Schwerbeschichtungsmasse | | | |
| Eindringtiefe eines 1 cm²-Stempel nach 4 h Belastung mit 50 kp/cm² in eine 2 mm Preßplatte | 0,55 mm | 0,34 mm | 0,29 mm |
| Verbleibende Eindringtiefe nach 10 min Entlastung, Rückstellung auf | 0,41 mm | 0,15 mm | 0,14 mm |

**Patentansprüche**

1. Füllstoffhaltige Schwerbeschichtungsmasse für textile Bodenbeläge mit einem thermoplastischen Bindemittel auf Polyolefin-Grundlage, wobei die Polyolefin-Grundlage ein amorphes Polyalphaolefin (APAO) enthält,

dadurch gekennzeichnet,

daß die Polyolefin-Grundlage teilweise oder gänzlich mit einer organischen ungesättigten Säure oder einem organischen ungesättigten Säureanhydrid umgesetzt ist.

2. Masse nach Patentanspruch 1,

dadurch gekennzeichnet,

daß das thermoplastische Bindemittel überwiegend ein ataktisches Polyolefin oder ein niedrigkristallines Olefinmischpolymer einerseits und in geringerer Menge ein teilweise oder gänzlich mit Säure oder Säureanhydrid umgesetztes isotaktisches Polyolefin enthält.

3. Masse nach Patentanspruch 2,

dadurch gekennzeichnet,

daß das mit Säure oder Säureanhydrid umgesetzte isotaktische Polyolefin eine Säurezahl > 10 mg KOH/g und einen MFI 230/2 > 30 g/10 min besitzt.

4. Masse nach Patentanspruch 1,

dadurch gekennzeichnet,

daß das thermoplastische Bindemittel ein teilweise oder gänzlich mit Säure oder Säureanhydrid umgesetztes ataktisches Polyolefin oder Olefinmischpolymer enthält.

5. Masse nach Patentanspruch 4,

dadurch gekennzeichnet,

daß das mit Säure oder Säureanhydrid umgesetzte ataktische Polyolefin oder Olefinmischpolymer eine Säurezahl von 3 bis 10 mg KOH/g und eine Schmelzviskosität bei 190 °C zwischen 300 und 60 000 mPa s besitzt.

6. Masse nach Patentansprüchen 1 bis 5,

dadurch gekennzeichnet,

daß das Bindemittel Wachse, Harze, Paraffin und/oder Stabilisatoren enthält.

7. Masse nach Patentansprüchen 1 bis 6,

dadurch gekennzeichnet,

daß der Füllstoff gepulverter Kalkstein oder Schwerspat ist und einen Anteil von 50 bis 85 Gew.-% besitzt.

**Claims**

1. A filler-containing heavy-duty coating composition for textile floorings having a thermoplastic binder with a polyolefin base, the polyolefin base comprising an amorphous polyalphaolefin (APAO), characterized in that the polyolefin base is reacted partly or completely with an organic unsaturated acid or an organic unsaturated acid anhydride.

2. A composition according to claim 1, characterized in that the thermoplastic binder comprises chiefly an atactic polyolefin or an olefin copolymer of low crystallinity on the one hand and a smaller amount of an isotactic polyolefin which has been reacted partly or completely with acid or acid anhydride.

3. A composition according to claim 2, characterized in that the isotactic polyolefin which has been reacted with acid or acid anhydride has an acid number > 10 mg of KOH/g and an MFI 230/2 > 30 g/10 min.

4. A composition according to claim 1, characterized in that the thermoplastic binder comprises an atactic polyolefin or olefin copolymer which has been reacted partly or completely with acid or acid anhydride.

5. A composition according to claim 4, characterized in that the atactic polyolefin or olefin copolymer which has been reacted with acid or acid anhydride has an acid number of 3 to 10 mg of KOH/g and a melt viscosity at 190 °C of between 300 and 60,000 mPa.s.

**6.** A composition according to any of claims 1 to 5, characterized in that the binder comprises waxes, resins, paraffin and/or stabilizers.

**7.** A composition according to any of claims 1 to 6, characterized in that the filler is powdered limestone or barytes and is present in an amount of 50 to 85% by weight.

**Revendications**

**1.** Composition d'enduction chargée contenant une charge pour revêtement de sol textile avec un liant thermoplastique à base de polyoléfine, où la base de polyoléfine contient une poly-$\alpha$-oléfine amorphe (PAOA), caractérisée en ce que la base de polyoléfine est mise à réagir partiellement ou totalement avec un acide organique insaturé ou un anhydride d'acide organique insaturé.

**2.** Composition suivant la revendication 1, caractérisée en ce que le liant thermoplastique contient, d'une part, de manière prédominante une polyoléfine atactique ou un polymère d'un mélange d'oléfines faiblement cristallin
et, en quantité plus faible, une polyoléfine isotactique ayant réagi partiellement ou totalement avec un acide ou un anhydride.

**3.** Composition suivant la revendication 2, caractérisée en ce que la polyoléfine isotactique ayant réagi avec l'acide ou l'anhydride présente une teneur en acide > 10 mg KOH par g et une MFI 230/2 > 30 g par 10 minutes.

**4.** Composition suivant la revendication 1, caractérisée en ce que le liant thermoplastique contient une polyoléfine atactique ou un polymère d'un mélange d'oléfines ayant réagi partiellement ou totalement avec un acide ou un anhydride.

**5.** Composition suivant la revendication 4, caractérisée en ce que la polyoléfine atactique ou le polymère d'an mélange d'olefines ayant réagi avec un acide ou un anhydride présente une teneur en acide de 3 à 10 mg KOH par g et une viscosité à chaud à 190°C entre 300 et 60 000 mPas.

**6.** Composition suivant l'une quelconque des revendications 1 à 5, caractérisée en ce que le liant contient une cire, une résine, une paraffine et/ou un stabilisateur.

**7.** Composition suivant l'une quelconque des revendications 1 à 6, caractérisée en ce que la charge est de la chaux ou de la barytine pulvérisée et est présente en une quantité de 50 à 85% en poids.